# EUROPEAN PATENT APPLICATION

(11) **EP 0 764 863 A1**
(43) Date of publication of application: **26.03.1997**
(21) Application number: 96115152.9
(22) Date of filing: 20.09.1996
(51) Int. Cl.: G02B 6/44

(54) **Multi-podded fiber optic cable assembly**

(30) Priority: 22.09.1995 US 532907
(71) Applicant: W.L. GORE & ASSOCIATES, INC., Newark, Delaware 19714 (US)
(72) Inventor: Sayegh,Emile G., Austin, TX 78745 (US); Rosenmayer,Charles T., Eau Claire, WI 54701 (US); Lloyd,Brian K., Pfügerville, TX 78660 (US); Holcomb,Richard G., Austin, TX 78754 (US)
(74) Representative: Klunker . Schmitt-Nilson . Hirsch

(57) **Abstract**

A multi-podded fiber optic cable assembly is provided having a first and at least a second optical fiber pod. Each of the first and at least second optical fiber pods have at least two optically transmissive glass fibers arranged in a generally parallel planar relationship to each other. A web material surrounds the first and at least second pods. The web material spaces the first and at least second pods at a predetermined fixed distance one to each other. The web material also fixedly locates the first and at least second pods in a generally planar, parallel relationship one to each other.

## Description

### FIELD OF THE INVENTION

This invention generally relates to optical transmission media. More particularly, the present invention relates to a multi-podded fiber optic cable assembly.

### BACKGROUND OF THE INVENTION

Optical fiber systems are revolutionizing such industries as the telecommunication and computer industries. These optical fiber systems are more economical and more robust than alternatives which have been used in the past, such as copper wire, radio relay, or satellite configurations. For example, regeneration of signals transmitted on copper cables is necessitated at intervals of distance measured in terms of a few miles, whereas with optical fibers, fewer regenerations over longer distances are needed. Also, contemporary commercial optical fiber systems have been designed to operate at 10 billion bits per second, and higher speeds have been demonstrated.

Telecommunication systems that use optical interconnects are capable of handling such high data rates and bandwidths with no signal interference. However, in order to be used effectively, optical fibers must be adequately protected from the effects of mechanical, thermal, and environmental stresses. Moreover, the optical fiber package should lend itself to density, cost effective termination, ease of routing, and upgradability.

Many optical interconnect applications occur between a pair of nodes which communicate directly and exclusively with each other. Such applications take advantage of the optical fiber's inherent advantages, such as immunity from electromagnetic interference (EMI), absence of ground loops, high data rates, and small size. Hence, in applications where a large amount of data is transmitted through several parallel channels, compactness, high density, and ease of termination are of primary importance.

In the past, fiber optic cables typically comprised bundles of fiber optic filaments contained within a cylindrical covering or casing having a circular cross section. Such cylindrically shaped fiber optic cables are not well adapted for use in electronic packaging requiring very high component density. Cables having a circular cross section have the additional disadvantage of requiring a larger radius of curvature to complete a given turn as the number of filaments contained within the cross section is increased. Cables having a round cross section are typically difficult to bifurcate so as to service or terminate at more than two ends. Additionally, as a fiber optic cable having a circular cross section is increased in diameter, packaging difficulty is experienced in routing the cable through ducting, around corners within electronic assemblies, under modules, or under and around multi-layer interconnection circuit boards.

An improved building block for optical systems is a fiber ribbon structure which, because of its two-dimensional nature, simplifies aligning of the fiber ends, which facilitates termination procedures. A fiber ribbon cable design may be the optimal cable solution for complex cable management problems. Ribbon cables provide large fiber count with small cable diameter, low profile, and low skew between fibers. Parallel ribbon solutions are becoming the building blocks for electronic interconnections in equipment at the frame and shelf level also known as "within the box". The optical fiber ribbon also provides mechanical support and protection. The ribbon structure, by totally enclosing the fibers, can additionally reduce mechanical abrasion and risk of exposure to moisture and other ambient hazards. United States Patents 5,189,721 and 5,253,318 describe two fiber optic ribbon cables which have been particularly successfully when employed in various applications.

Parallel optical links have been developed which are employing novel schemes of multiple, bi-directional, parallel communication paths which are capable of transferring data at rates in excess of 3 Gbits/sec. In certain embodiments of such parallel links, schemes have incorporated 10 transmit and 10 receive channels in single 96-lead packages.

Predicted fiber optic system evolutions include an increase in the use of parallel data bussing, an increase in the use of array lasers for data transmission, and a decrease in the use of multiplexing of data signals. There is a need to increase the density of present fiber optic ribbon cable assemblies to satisfy these predicted fiber optic system evolutions. However, these more dense fiber optic ribbon cable assemblies must facilitate termination to multi-fiber connectors, provide for an efficient mechanical transition from the ribbon cable to a multi-fiber connector, facilitate installation, provide for efficient individual optical fiber management, and provide optimal flexibility.

### SUMMARY OF THE INVENTION

The present invention advances the art of optical transmission media beyond which is known to date. In one aspect of the present invention a multi-podded fiber optic cable assembly is provided having a first and at least a second optical fiber pod. Each of the optical fiber pods have at least two optically transmissive glass fibers arranged in a generally parallel planar relationship to each other. A web material surrounds the pods and spaces the optical fiber pods at a predetermined fixed distance one to each other. Also, the web material fixedly locates the optical fiber pods in a generally planar, parallel relationship one to each other.

The optical fiber pods may be surrounded by a buffer material, a binder material, a strength member, or a protective polymer jacket. The optical fiber pods are each defined by opposed ends which may have attached thereto a multi-fiber connector. The multi-podded fiber optic cable assembly may have an optical fiber density of greater than 2.1 optical fibers per square millimeter, and a bend radius of less than 0.5 inches.

It is a purpose of the present invention to provide an improved fiber optic cable assembly having an increased optical fiber density.

It is another purpose of the present invention to provide such an improved fiber optic cable assembly which may be easily terminated.

It is another purpose of the present invention to provide such an improved fiber optic cable assembly which may be easily routed.

It is another purpose of the present invention to provide such an improved fiber optic cable assembly which is flexible.

It is another purpose of the present invention to provide such an improved fiber optic cable assembly which facilitates the installation thereof in an optical system.

### BRIEF DESCRIPTION OF THE DRAWINGS

The foregoing summary, as well as the following detailed description of a preferred embodiment of the invention, will be better understood when read in conjunction with the appended drawings. For purposes of illustrating the invention, there is shown in the drawings an embodiment which is presently preferred. It should be understood, however, that the invention is not limited to the precise arrangement and instrumentality shown. In the drawings:

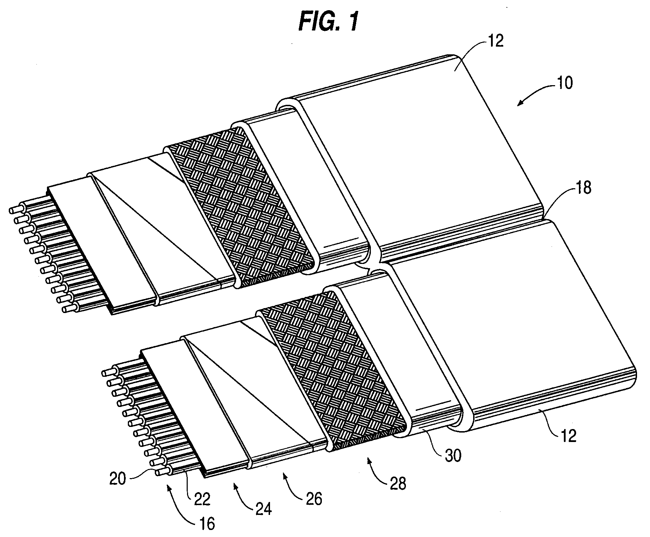

Figure 1 is a perspective view of one embodiment of the multi-podded fiber optic cable assembly of the present invention;

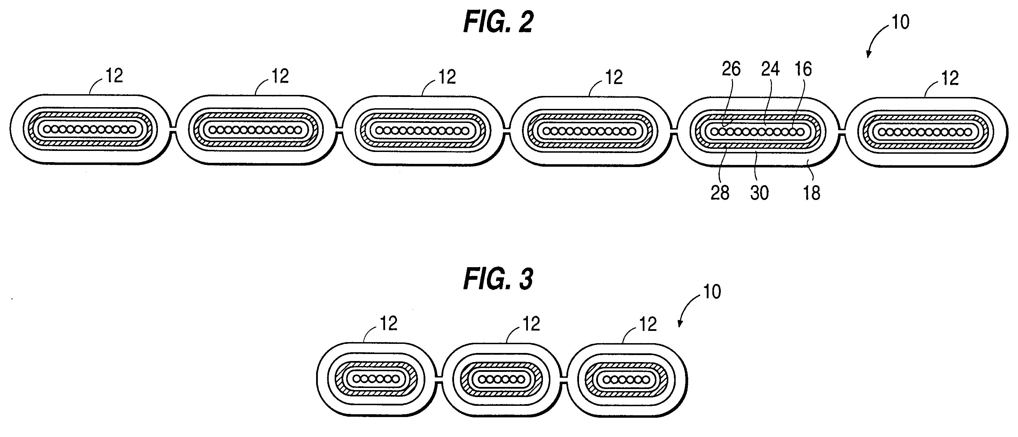

Figure 2 is an end view of one embodiment of the multi-podded fiber optic cable assembly of the present invention showing six optical fiber pods;
Figure 3 is an end view of one embodiment of the multi-podded fiber optic cable assembly of the present invention showing three optical fiber pods;

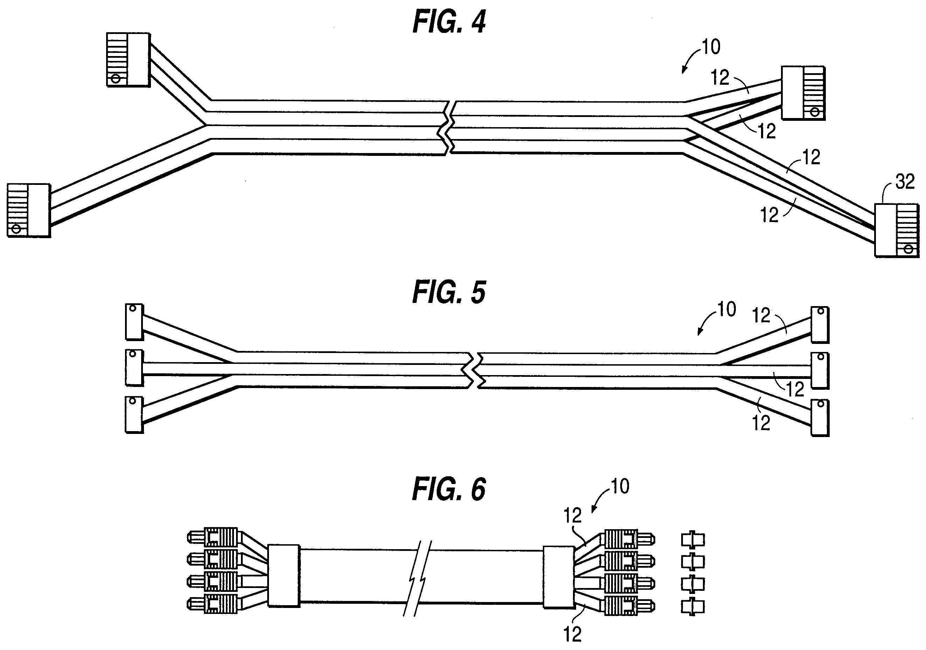

Figure 4 is a top plan view of one embodiment of the multi-podded fiber optic cable assembly shown terminated to a plurality of multi-fiber connectors;
Figure 5 is a top plan view of one embodiment of the multi-podded fiber optic cable assembly shown terminated to a plurality of multi-fiber connectors;
Figure 6 is a top plan view of one embodiment of the multi-podded fiber optic cable assembly shown terminated to a plurality of multi-fiber connectors;
Figure 7 is an end view of a prior art cylindrically shaped fiber optic cable; and
Figure 8 is a view of a prior art cylindrically shaped fiber optic cable.

### DETAILED DESCRIPTION OF THE INVENTION

In one embodiment of the present invention a multi-podded fiber optic cable assembly, which is generally indicated at 10, comprises at least first and second optical fiber pods 12. Each optical fiber pod includes at least two optically transmissive glass fibers 16 arranged in a generally parallel, planar relationship to each other. A web material 18 surrounds the optical fiber pods 12. The web material 18 spaces the optical fiber pods at a predetermined fixed distance one to each other, and the web material also fixedly locates the optical fiber pods in a generally planar, parallel relationship one to each other. The multi-podded fiber optic cable assembly 10 of the present invention has a bend radius of less than 0.5 inches.

As the term is used herein, porous polytetrafluoroethylene (PTFE) shall mean a membrane which may be prepared by any number of known processes, but is preferably prepared by expanding PTFE as described in U.S. Pat. Nos. 4,187,390; 4,110,392; and 3,953,566 (incorporated herein by reference), to obtain expanded, porous polytetrafluoroethylene. By "porous" it is meant that the membrane has an air permeability of at least 0.01 cubic feet per square foot at 0.5 inch water gauge. Air permeabilities of 300 cubic feet per square feet or more can be used. The pores are micropores formed by the nodes and fibrils of the porous PTFE.

The optical fibers may be defined by a conventional core 20 and a cladding 22. The core 20 may comprise any suitable light transmitting material, such as but not limited to, pure silica (SiO₂) glass, silica (SiO₂) glass doped with a suitable material such as germania (GeO₂), heavy metal fluoride-based glass, chalcogenide glass, fluoride-based glass, borosilicate-based glass, or plastic, for example. Surrounding the core 20 is a cladding 22 which may be comprised of, for example, a pure silica, or an amorphous fluoropolymer. The cladded core may additionally be coated with a polyimide, acrylic, polyether ether keytone, polyurethane or other suitable polymer coatings. The amorphous fluoropolymer may be a homopolymer of bis(trifluoromethyl)difluorodioxole or a copolymer with tetrafluoroethylene or other fluorinated ethylenes. The core 20, cladding 22 and the coating materials are generally known in the art and may be obtained as an integral optical fiber from such suppliers as Corning Incorporated, or AT & T, for example.

The multi-podded fiber optic cable assembly may include any number of optical fiber pods 12 as may be required by a predetermined application. Each pod may comprise from 2 to 144 optically transmissive glass fibers. The density of the optical fibers of the multi-podded fiber optic cable assembly may exceed 2.1 optical fibers per square millimeter. The optical fibers of each of the optical fiber pods should be spaced at intervals of from 0 to about .100 inches.

Each individual optical fiber pod 12 may be surrounded by one or more of the following: a buffer material 24, a binder 26, a strength member 28, or a protective polymer jacket 30. The buffer material 24 may have a thickness ranging from about 0.002 to about 0.012 inches. The binder material 26 may have a thickness ranging from about 0.002 to about 0.012 inches. The protective polymer jacket 30 may have a thickness ranging from about 0.005 to about 0.090 inches. The web material 18 may have a thickness ranging from about 0.005 to about 0.050 inches.

The buffer material 24 may be at least in part porous polytetrafluoroethylene, polyester, foamed polyethylene, porous polypropylene, foamed polyurethane, foamed polytetrafluoroethylene, foamed fluorinated ethylenepropylene, foamed polyvinyl chloride, foamed rubber, closed cell, porous films, porous polypropylene films, or a combination of any of the foregoing. The binder material 26 may be at least in part porous polytetrafluoroethylene, polytetrafluoroethylene, fluoropolymer based materials, or polyester. The strength member 26 may comprise braided fibers, such as but not limited to braided or served fibers of aramid, polyester, polytetrafluoroethylene, polysulfone, or polyamide fibers. The protective polymer jacket 30 may be comprised of porous polytetrafluoroethylene, polyimide, nylon, polyether ether ketone, organopolysiloxane-imide, polyester, polyester terephthalate, full density polytetrafluoroethylene, tetrafluoroethylene-hexafluoropropylene copolymer, perfluoroalkoxy tetrafluoroethylene, ethylene-tetrafluoroethylene copolymer, copolymer of ethylene and PTFE, polyvinyl chloride, rubber, silicone, polyethylene, polyvinylidene fluoride, thermoplastic elastomers and urethane.

If a polymer jacket 30 is employed, the external dimension of the polymer jacket should be such that each polymer jacketed optical fiber pod 12 should precisely mate with any suitable multi-fiber connector 32. The multi-fiber connector 32 may be attached to any one, or all, of the ends of the optical fiber pods. An example of a suitable multi-fiber connector 32 is an MT ferrule type connector which may be obtained from U.S. Conec Ltd. of Hickory, North Carolina, or Europtics of the United Kingdom.

It has been discovered that closed-cell porous polymeric materials, having a minimum porosity per unit volume of material of about 10%, such as foamed polymeric materials, for example, have more mechanical compliance compared to full density polymers because they contain a significant amount of void space. More particularly, the essential purpose of a buffer material is to widely distribute mechanical loads in both a temporal and spacial sense. This is because glass fibers are susceptible to fracture when subjected to closely distributed temporal loads, i.e. impact loads. A more common term for this is "strain rate sensitivity." Spacial distribution of loads is necessary to both 1) reduce microbending losses caused by point loads; and 2) reduce the susceptibility to fiber fracture by concentrated loads. Porous polymers offer improved temporal load distribution by having a lower amount of material in the loaded area. Since there is less material available to absorb the load, the effective unit loading is higher. This higher loading means that the material undergoes more plastic (versus elastic) deformation. The plastic deformation prevents loads from being rapidly transferred to the fiber. The spacial load distribution is accomplished in a similar manner. Because there is less material in the area of the load, the load must be distributed over a wider area.

The aforedescribed polymers, for use as the buffer 24, may be made porous, or may be foamed, by any suitable method. For example, the porosity may be created by a chemical foaming agent, whereby the porosity is achieved when the polymer is melted in the presence of the chemical foaming agent. The chemical foaming agent reacts to form a gaseous by-product, which becomes entrapped within the molten polymer, thereby creating porosity, generally of the closed cell type. Additionally, porosity may be created by the injection of a gas into the molten polymer. Porosity may also be achieved by sintering together loosely compacted particles. Also, porosity may be achieved in the polymer by mechanical expansion of the polymer under predetermined conditions. As should be understood, polymer chains generally separate during a mechanical expansion process which results in porosity, generally of the open cell type.

Application of the porous polymer to the individual or plurality of optical fibers may be accomplished by any suitable method. For example, a thermoplastic extrusion process may be employed, whereby the temperature in the extruder is sufficient to initiate the foaming reaction. Also, a dip coating process may be employed wherein the polymer and a foaming agent are applied to optical fiber(s) prior to foaming; a subsequent thermal or chemical treatment would be employed to cause the foaming reaction. Additionally, a porous polymer may be prepared in tape form prior to applying it to the waveguide. The tape may be applied to the waveguide by wrapping or by laminating. Low-temperature thermoplastic porous polymers may be bonded to the fibers without the use of a separate adhesive as in the prior art. However, an adhesive may be required to provide sufficient bonding of the tape to the waveguide. A porous polymer may also be prepared in a tubular or hollow form into which an optical fiber is inserted.

In one embodiment of the present invention, the multi-podded fiber optic cable assembly may be formed by extruding the web material 18 to the optical fiber pods. More particularly, a predetermined number of built up optical fiber pods are spooled separately to an extrusion die having a predetermined shape. Thereafter, the web material 18 may be extruded to surround the optical fiber pods and form the multi-podded fiber optic cable assembly. If a protective polymer jacket 30 is employed, the extruded web material 18 should be comprised of a material having a lower melt temperature than the material of the protective polymer jacket.

In another embodiment of the present invention, the web material 18 may comprise porous polytetrafluoroethylene, polyimide, polyether ether ketone, organopolysiloxane-imide, polyester, polyester terephthalate, full density polytetrafluoroethylene, tetrafluoroethylene-hexafluoropropylene copolymer, perfluoroalkoxy tetrafluoroethylene, ethylene-tetrafluoroethylene copolymer, copolymer of ethylene and PTFE, polyvinyl chloride, rubber, silicone, polyethylene, polyvinylidene fluoride, thermoplastic elastomers or urethane. The web material 18 may be laminated to a predetermined number of optical fiber pods to form a multi-podded fiber optic cable assembly of the present invention. If a protective polymer jacket 30 is employed, the web material 18 should be comprised of a material having a lower melt temperature than the material of the protective polymer jacket.

In yet another embodiment of the present invention the web material may comprise two polyester film strips which have deposited on at least one surface an adhesive, such as a polyester adhesive. The two polyester strips may then be laminated to the optical fiber pods under predetermined heat and pressure. Such a web material may be made from MIL-ENE® tapes from W.L. Gore and Associates. (MIL-ENE is a registered trademark of W.L. Gore and Associates.)

In another embodiment of the present invention, the web material comprises two strips of porous polytetrafluoroethylene which may be laminated to the optical fiber pods under predetermined heat and pressure.

In yet another embodiment of the present invention, the web material comprises first and second films each including at least a layer of porous polytetrafluoroethylene, a layer of polyester material and an adhesive selected from a group consisting of polyester, polyurethane, and organosiloxane-urethane polymer. The first and second films are laminated to the optical fiber pods under predetermined heat and pressure.

During the manufacturing of a multi-podded fiber optic cable assembly, applied tensions to the various optical fiber pods should be equal with respect to each optical fiber pod. Also, process temperatures should not exceed predetermined acceptable process temperatures of the optical fibers or of the materials employed.

The multi-podded fiber optic cable assembly may be made in accordance with the detailed teachings of U.S. Patents 5,189,721 and 5,253,318 which are incorporated herein by specific reference.

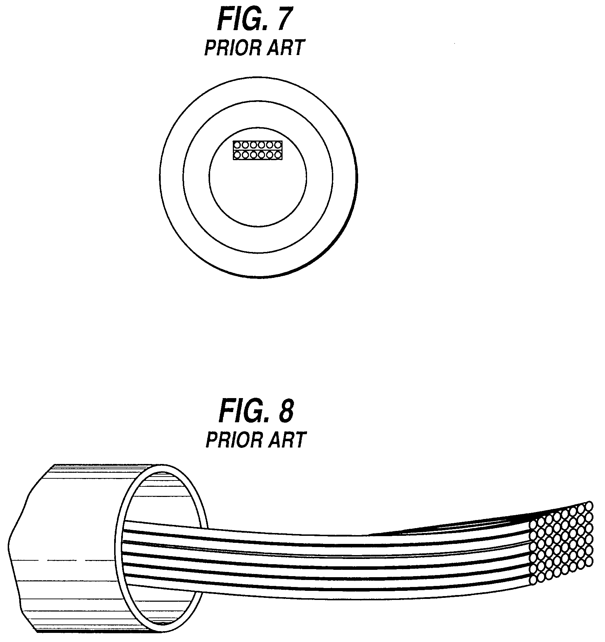

Figure 7 is a schematic view of a prior art fiber optic cable assembly having centrally disposed therein a loose stack of at least one fiber optic ribbon cable. In this type of prior art fiber optic cable assembly, density may be achieved by stacking fiber optic ribbon cables within the central portion. Of course, such a method of increasing optical fiber density reduces the flexibility of the cable assembly. Figure 8 is a schematic view of a prior art fiber optic cable assembly having centrally disposed a bundle of loose optical fibers. The prior art fiber optic cable assemblies of Figures 7 and 8 are not well adapted for use in electronic packaging requiring very high component density. These type cables require a larger radius of curvature to complete a given turn as the number of filaments contained within the cross section is increased. Also, these type cables are typically difficult to bifurcate so as to service or terminate at more than two ends. Finally, the fiber optic cable assemblies of Figures 7 and 8 are difficult to route through ducting, around comers within electronic assemblies, under modules, or under and around multi-layer interconnection circuit boards.

Although a few exemplary embodiments of the present invention have been described in detail above, those skilled in the art readily appreciate that many modifications are possible without materially departing from the novel teachings and advantages which are described herein. Accordingly, all such modifications are intended to be included within the scope of the present invention, as defined by the following claims.

## Claims

1. A multi-padded fiber optic cable assembly comprising:
a first optical fiber pod having at least two optically transmissive glass fibers arranged in a generally parallel planar relationship to each other;
at least a second optical fiber pod having at least two optically transmissive glass fibers arranged in a generally parallel planar relationship to each other; and
a web material surrounding the first and at least second optical fiber pods, the web material spacing the first and at least second optical fiber pods at a predetermined fixed distance one to each other, and wherein the web material fixedly locates the first and at least second optical fiber pods in a generally planar, parallel relationship one to each other.

2. The multi-podded fiber optic cable assembly of claim 1, wherein each pod comprises from 2 to 144 optically transmissive glass fibers.

3. The multi-podded fiber optic cable assembly of claim 1, wherein the web material comprises, in part, two strips of porous polytetrafluoroethylene which are laminated to the first and at least second optical fiber pods.

4. The multi-podded fiber optic cable assembly of claim 3, wherein the web material further comprises two polyester strips, each strip having deposited thereon an adhesive, and wherein the two polyester strips are laminated to the first and at least second optical fiber pods on top of the porous polytetrafluoroethylene.

5. The multi-podded fiber optic cable assembly of claim 4, wherein the adhesive is selected from a group consisting of polyester, polyurethane, and organosiloxane-urethane polymer.

6. The multi-podded fiber optic cable assembly of claim 1, wherein the at least two optically transmissive glass fibers of the first and at least second optical fiber pods are spaced at an interval of from 0 to about .100 inches.

7. The multi-podded fiber optic cable assembly of claim 1, wherein the first and at least second optical fiber pods are surrounded by a buffer material.

8. The multi-podded fiber optic cable assembly of claim 7, wherein the buffer material is at least in part selected from a group consisting of: porous polytetrafluoroethylene, polyester, foamed polyethylene, porous polypropylene, foamed polyurethane, foamed polytetrafluoroethylene, foamed fluorinated ethylenepropylene, foamed polyvinyl chloride, foamed rubber, closed cell, porous films, and porous polypropylene films.

9. The multi-podded fiber optic cable assembly of claims 1 or 7, wherein the first and at least second optical fiber pods are surrounded by a binder material.

10. The multi-podded fiber optic cable assembly of claim 9, wherein the binder material is at least in part selected from a group consisting of: porous polytetrafluoroethylene, polytetrafluoroethylene, fluoropolymer based materials, and polyester.

11. The multi-podded fiber optic cable assembly of claims 1, 7, or 9, wherein the first and at least second optical fiber pods are surrounded by a strength member.

12. The multi-podded fiber optic cable assembly of claim 11, wherein the strength member comprises a material selected from a group consisting of: braided fibers and served fibers.

13. The multi-podded fiber optic cable assembly of claim 12, wherein the braided and served fibers are selected from a group consisting of: polyester, polytetrafluoroethylene, polysulfone, and polyamide fibers.

14. The multi-podded fiber optic cable assembly of claims 1, 7, 9, or 11, wherein the first and at least second optical fiber pods are surrounded by a protective polymer jacket.

15. The multi-podded fiber optic cable assembly of claim 14, wherein the protective polymer jacket is selected from a group consisting of: nylon, polyimide, polyether ether ketone, organopolysiloxane-imide, polyester, polyester terephthalate, porous polytetrafluoroethylene, full density polytetrafluoroethylene, tetrafluoroethylene-hexafluoropropylene copolymer, perfluoroalkoxy tetrafluoroethylene, ethylene-tetrafluoroethylene copolymer, copolymer of ethylene and PTFE, polyvinyl chloride, rubber, silicone, polyethylene, polyvinylidene fluoride, thermoplastic elastomers and urethane.

16. The multi-podded fiber optic cable assembly claims 1, 7, 9, 11, or 14, wherein the web material comprises in part a material selected from a group consisting of: polyimide, polyether ether ketone, organopolysiloxane-imide, polyester, polyester terephthalate, porous polytetrafluoroethylene, full density polytetrafluoroethylene, tetrafluoroethylene-hexafluoropropylene copolymer, perfluoroalkoxy tetrafluoroethylene, ethylene-tetrafluoroethylene copolymer, copolymer of ethylene and PTFE, polyvinyl chloride, rubber, silicone, polyethylene, polyvinylidene fluoride, thermoplastic elastomers and urethane.

17. The multi-podded fiber optic cable assembly of claims 1, 7, 9,11, or 14, wherein the first and at least second optical fiber pods are each defined by opposed ends, wherein a multi-fiber connector is attached to at least one end of at least the first and at least second optical fiber pods.

18. The multi-podded fiber optic cable assembly cable of claim 1, wherein the web material comprises:
a first film including a layer of porous polytetrafluoroethylene, a layer of polyester material and an adhesive selected from a group consisting of polyester, polyurethane, and organosiloxane-urethane polymer; and
a second film including a layer of porous polytetrafluoroethylene, a layer of polyester material and an adhesive selected from a group consisting of polyester, polyurethane, and organosiloxane-urethane polymer, wherein the first and second films are laminated to the first and at least second optical fiber pods.

19. The multi-podded fiber optic cable assembly of claim 14, wherein the web material comprises a protective polymeric material having a lower melt temperature than the melt temperature of the protective polymeric material surrounding the first and at least second optical fiber pods.

20. The multi-podded fiber optic cable assembly of claim 1 having an optical fiber density of greater than 2.1 optical fibers per square millimeter.

21. The multi-podded fiber optic cable assembly of claim 14, wherein each polymer jacket surrounding the first and the at least second optical pods has an external dimension which is suitable for precisely mating with a multi-fiber connector.

22. The multi-podded fiber optic cable assembly of claim 1 having a bend radius of less than 0.5 inches.
